# EUROPÄISCHE PATENTSCHRIFT

(11) **EP 4 566 444 B1**
(45) Veröffentlichungstag und Bekanntmachung des Hinweises auf die Patenterteilung: **26.08.2026**
(21) Anmeldenummer: 24216211.3
(22) Anmeldetag: 28.11.2024
(51) Int. Cl.: A01K 1/12

(54) **MELKKARUSSELL UND VERFAHREN ZUM STEUERN EINES MELKKARUSSELLS**
MILKING CAROUSEL AND METHOD FOR CONTROLLING A MILKING CAROUSEL
CARROUSEL DE TRAITE ET PROCÉDÉ DE COMMANDE D'UN CARROUSEL DE TRAITE

(30) Priorität: 04.12.2023 DE 102023133838
(43) Veröffentlichungstag der Anmeldung: 11.06.2025
(73) Patentinhaber: GEA Farm Technologies GmbH, 59199 Bönen (DE)
(72) Erfinder: BARBA, Marcelo Alfredo, 48147 Münster (DE)
(74) Vertreter: Kleine, Hubertus

(56) Entgegenhaltungen:
- EP-A1- 1 474 970
- WO-A1-2011/084048
- DE-A1- 102005 038 971

## Beschreibung

Die Erfindung betrifft ein Verfahren zum Steuern eines Melkkarussells, das Melkplätze zum Melken von milchgebenden Tieren aufweist. Die Erfindung betrifft weiterhin ein Melkkarussell mit einer Mehrzahl derartiger Melkplätze zum Melken von milchgebenden Tieren, mit dem das Verfahren durchgeführt wird. Als Melkkarussell wird eine sich um einen zentralen Punkt drehende Plattform mit einer Mehrzahl von Melkplätzen bezeichnet. Ein derartiges Melkkarussell ist beispielsweise aus der Druckschrift WO 2009/093964 A1 bekannt. Weitere Beispiele sind bekannt aus den Druckschrfiten DE 10 2005 038971 A1, WO 2011/084048 A1 und EP 1 474 970 A1.

Die Melkplätze sind in der Regel ringförmig am äußeren Umfang des Melkkarussells angeordnet. Die milchgebenden Tiere, üblicherweise Kühe, aber auch Büffel, Ziegen oder Schafe, betreten das Melkkarussell in einem Eingangsbereich, wo sie zu einem der Melkplätze geleitet werden. Sie verbleiben an dem Melkplatz, während sich die Plattform dreht und werden während dieser Aufenthaltszeit gemolken. Das Melken kann teil- oder vollautomatisiert erfolgen. Bei einem teilautomatisierten Melken werden Melkbecher von Hand an Zitzen der Tiere angesetzt, der weitere Verlauf des Melkens, inklusive des Abnehmens der Melkbecher, erfolgt dann in der Regel automatisch. Bei einem vollautomatischen Melken wird auch das Ansetzten der Melkbecher, auch Melkzeug genannt, automatisch durch einen Melkroboter durchgeführt.

In der Regel dreht sich das Melkkarussell kontinuierlich in einer Drehgeschwindigkeit, dass die Tiere die Plattform während der Drehbewegung betreten und wieder verlassen können. Melkkarusselle sind in unterschiedlichen Größen mit einigen zehn bis über hundert Melkplätzen gebräuchlich. Normalerweise verbleibt ein Tier für etwa eine Umdrehung der Plattform auf dem Melkplatz und wird in dieser Zeit ausgemolken. Das Tier kann dann den Melkplatz in einem Ausgangsbereich, der üblicherweise benachbart zum Eingangsbereich angeordnet ist, wieder verlassen, so dass der Melkplatz beim Erreichen des Eingangsbereichs von einem nächsten Tier betreten werden kann.

Insbesondere bei kleineren oder mittelgroßen Melkkarussellen kann es dabei vorkommen, dass ein Tier nach einer absolvierten Runde auf dem Melkkarussell noch nicht ausgemolken ist. Häufig können die gebräuchlichen Melkkarusselle in einem Betriebsmodus betrieben werden, der es zulässt, dass das Tier beim Durchfahren des Ein- und Ausgangsbereichs auf dem Melkplatz gehalten wird und dem Tier damit eine zweite (oder allgemeiner weitere) Runde auf dem Melkkarussell zur Verfügung gestellt wird, in der der Melkvorgang abgeschlossen werden kann. Um das Tier auf dem Melkplatz zu halten, kann beispielsweise ein angesteuert schließ- und öffenbares Begrenzungsgitter an dem Melkplatz vorgesehen sein. Zur Entscheidung, ob eine zweite oder gegebenenfalls noch weitere Runde auf dem Melkkarussell bei einem Tier absolviert werden soll, können beispielsweise die beim automatischen Melken vorgenommenen Milchmengenmessungen herangezogen werden.

Dieses Verfahren hat sich etabliert und ist grundsätzlich unproblematisch einsetzbar, solange das Melkkarussell nur von einer Tiergruppe besucht wird. Bei größeren Höfen ist es üblich, dass Tiere in unterschiedlichen Gruppen, zum Beispiel aus verschiedenen Ställen, nacheinander zum Melkkarussell geleitet werden. Auch dieses kann automatisiert vorgenommen werden, indem von einer übergeordneten Hofsteuerung Gatter automatisch geöffnet und geschlossen werden. Wenn ein Melkkarussell derart von verschiedenen Tiergruppe genutzt wird, besteht das Problem, dass eine von einem Tier einer ersten Tiergruppe absolvierte weitere Runde auf einem Melkkarussell dazu führen kann, dass dieses Tier aus der ersten Tiergruppe das Melkkarussell erst verlässt, wenn dieses auch bereits von Tieren der zweiten Tiergruppe genutzt wird. Das Tier aus der ersten Tiergruppe gelangt damit in die zweite Tiergruppe und wird dann z.B. zu einem Stall zurückgeführt, in dem es eigentlich nicht steht. Die Tiergruppen können also durch die Option der weiteren Runde auf dem Melkkarussell vermischt werden. Um dieses zu verhindern, wird von der Option des Absolvierens einer weiteren Runde auf dem Melkkarussell bislang Abstand genommen, wenn das Melkkarussell unterschiedlichen Tiergruppen zugänglich ist.

Es ist eine Aufgabe der vorliegenden Erfindung ein Verfahren zum Steuern eines Melkkarussells und ein mit Hilfe eines solchen Verfahrens gesteuertes Melkkarussell zu schaffen, bei dem die Möglichkeit, eine weitere Runde auf dem Melkkarussell zu absolvieren, für Tiere auch dann besteht, wenn das Melkkarussell Tieren unterschiedlicher Tiergruppen zugänglich ist.

Diese Aufgabe wird durch ein Verfahren beziehungsweise ein Melkkarussell mit den Merkmalen des jeweiligen unabhängigen Anspruchs gelöst. Vorteilhafte Ausgestaltungen und Weiterbildungen sind jeweils Gegenstand der abhängigen Ansprüche.

Ein erfindungsgemäßes Verfahren der eingangs genannten Art weist die folgenden Schritte auf: Es wird ermittelt, ob ein Tier, das sich in einem der Melkplätze befindet, voraussichtlich am Ende einer absolvierten Runde auf der Drehplattform ausgemolken sein wird. Weiter wird eine Zugehörigkeit der Tiere auf der Drehplattform zu einer Tiergruppe ermittelt. Es wird ein Durchfahren einer weiteren Runde auf der Drehplattform für Tiere, die am Ende der absolvierten Runde auf der Drehplattform nicht ausgemolken sind, zugelassen, wenn eine Anzahl von Tieren einer zweiten Tiergruppe auf der Drehplattform kleiner oder gleich einer vorgegeben Maximalzahl ist. Dagegen wird das Durchfahren der weiteren Runde auf der Drehplattform für Tiere, die am Ende der absolvierten Runde auf der Drehplattform nicht ausgemolken sind, unterbunden, wenn die Anzahl von Tieren der zweiten Tiergruppe auf der Drehplattform größer als die vorgegebene Maximalzahl ist.

Erfindungsgemäß wird das Zulassen der Option der weiteren Runde davon abhängig gemacht, ob das Karussell mit Tieren verschiedener Tiergruppen belegt ist. Durch das Verfahren wird erreicht, dass die Option, nicht ausgemolkene Tiere noch eine weitere Runde auf dem Karussell zu belassen, solange bestehen bleibt, wie es nicht zu einer Vermischung von Tiergruppen kommt. Besteht dagegen die Gefahr der Vermischung, wird die Option der weiteren Runde unterbunden. Möglich wird das durch ein Auswerten der Belegung der Drehplattform unter Berücksichtigung der Tiergruppenzugehörigkeit der Tiere.

Dabei kann die Maximalzahl gleich 1 gewählt sein, so dass eine Vermischung strikt vermieden wird. Es kann alternativ aber auch eine kleine natürliche Zahl als Maximalzahl gewählt werden, beispielsweise aus dem Bereich 2 bis 5, wodurch eine gewisse, eventuell bereits zuvor schon bestehende Vermischung toleriert wird, um die Option der weiteren Runde weniger oft zu unterbinden.

Bei einer vorteilhaften Ausgestaltung des Verfahrens weist das Melkkarussell eine Erfassungsvorrichtung zur Erfassung von Identifikationsinformationen der Tiere auf, wobei das Ermitteln der Tiergruppenzugehörigkeit der Tiere auf den erfassten Identifikationsinformationen basiert. Die Erfassungseinrichtung kann beispielsweise in einem Eingangsbereich angeordnet sein, in dem die Tiere die Drehplattform betreten, z.B. im Bereich eines Gatters, das die Tiere passieren müssen, um auf die Drehplattform zu gelangen. Die Erfassungseinrichtung kann auch unbeweglich über der Drehplattform angeordnet sein. Weiter kann vorgesehen sein, jeweils eine Erfassungseinrichtung an jedem Melkplatz anzuordnen. Die Erfassungseinrichtung kann z.B. eine RFID (Radio Frequency Identification)-Auslesevorrichtung umfassen, die eine dem Tier zugeordnete Identifikationsnummer ausliest, die beispielsweise in einem am Ohr des Tieres befestigten RFID-Chip gespeichert ist. Der Identifikationsnummer sind Kenndaten des Tieres zugeordnet und z.B. in einer übergeordneten Hofsteuerung gespeichert. Zu den Kenndaten gehört auch eine Tiergruppenzugehörigkeit, die entsprechend ausgelesen bzw. abgerufen werden kann.

Bei einer weiteren vorteilhaften Ausgestaltung des Verfahrens umfasst das Zulassen des Durchfahrens der weiteren Runde auf der Drehplattform ein Aktivieren einer Sperre an dem entsprechenden Melkplatz. Die Sperre, z.B. ein einschwenkbares oder hoch- bzw. herunterfahrbares Gitter, hindert das Tier am Verlassen des Melkplatzes. Um dagegen das Durchfahren der weiteren Runde auf der Drehplattform zu verhindern, wird die Sperre an dem entsprechenden Melkplatz deaktiviert. Zudem kann vorgesehen sein, die Drehzahl der Drehplattform zu verringern und/oder die Drehplattform zu stoppen, um ein Tier möglichst noch auszumelken, bevor es die Drehplattform verlässt, wenn das Durchfahren der weiteren Runde unterbunden wird. Schließlich kann, gegebenenfalls nach einem vorausgehenden Verlangsamen und/oder Stoppen der Drehplattform das Melken an dem entsprechenden Melkplatz auch vor dem Ausmelken abgebrochen werden.

Bei einer weiteren vorteilhaften Ausgestaltung des Verfahrens umfasst der Schritt des Ermittelns, ob ein Tier voraussichtlich am Ende der absolvierten Runde auf der Drehplattform ausgemolken sein wird, ein Auswerten einer bislang in dem Melkvorgang gemolkenen Milchmenge und/oder einer Milchflussrate. Bevorzugt werden dazu die bislang in dem Melkvorgang gemolkene Milchmenge und/oder die Milchflussrate an einer oder mehrerer Positionen des Melkkarussells ermittelt und mit Vergleichswerten verglichen. Insbesondere werden dabei tierindividuelle Vergleichswerte genutzt, so dass die Abschätzung, ob ein Tier am Ende der Runde ausgemolken sein wird oder nicht, mit einer hohen Wahrscheinlichkeit zutreffend ist. Es wird dabei vorteilhaft auch mitberücksichtigt, wie lange der letzte Melkvorgang zurückliegt. Auf diese Weise können möglichst zutreffende Vorhersagen z.B. für die zu erwartende Milchmenge gemacht werden.

Ein erfindungsgemäßes Melkkarussell weist eine Mehrzahl von Melkplätzen zum Melken von milchgebenden Tieren auf einer Drehplattform und eine Steuereinrichtung auf. Es zeichnet sich dadurch aus, dass die Steuereinrichtung zur Durchführung eines zuvor genannten Verfahrens eingerichtet ist. Es ergeben sich die im Zusammenhang mit dem Verfahren dargestellten Vorteile.

Die Erfindung wird nachfolgend anhand eines Ausführungsbeispiels mithilfe von Figuren näher erläutert. Die Figuren zeigen:
- Fig. 1: eine schematische Darstellung eines Melkkarussells in einem ersten Belegungszustand;
- Fig. 2: das Melkkarussell der Fig. 1 in einem zweiten Belegungszustand;
- Fig. 3: das Melkkarussell der Fig. 1 in einem dritten Belegungszustand;
- Fig. 4: das Melkkarussell der Fig. 1 in einem vierten Belegungszustand; und
- Fig. 5: ein Flussdiagramm eines erfindungsgemäßen Verfahrens.

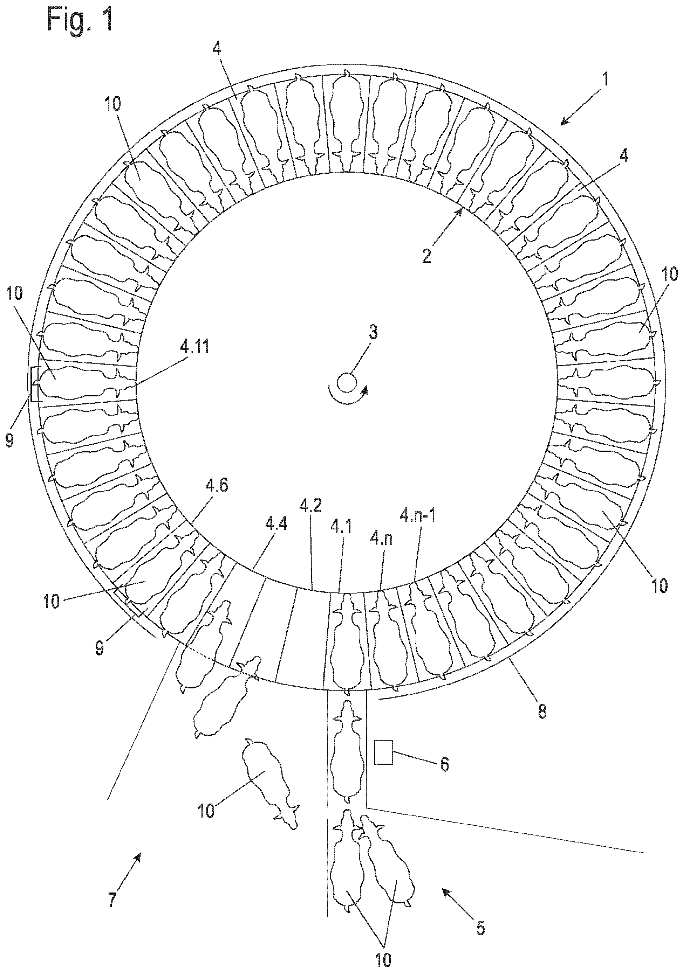

Die Figuren 1-4 zeigen in einer Draufsicht jeweils eine schematische Darstellung eines Melkkarussells 1, das zur Durchführung eines erfindungsgemäßen Verfahrens geeignet und eingerichtet ist. Die Figuren geben unterschiedliche Drehstellungen und unterschiedliche Belegungen des Melkkarussells 1 mit Tieren 10, 11, hier beispielhaft Kühen, wieder. In anderen Ausgestaltungen des Melkkarussells 1 kann dieses auch zum automatisierten Melken anderer milchgebender Tiere, z. B. von Büffeln, Schafen oder Ziegen, eingerichtet sein. Tiere 10 sind dabei einer ersten Tiergruppe zugeordnet und Tiere 11 einer zweiten Tiergruppe.

Das Melkkarussell 1 weist eine Drehplattform 2 auf, die sich um einen Drehpunkt 3 dreht, wobei im dargestellten Fall eine Drehung entgegen des Uhrzeigersinns vorgesehen ist. Auf dem Melkkarussell 1 sind entlang des äußeren Umfangs eine Mehrzahl von Melkplätzen 4 angeordnet. Bei dem dargestellten Beispiel ist die sich drehende Drehplattform 2 kreisringförmig ausgestaltet, der innenliegende Teil des Melkkarussells 1 ist feststehend. Alternativ kann die Drehplattform auch kreisförmig mit einem sich mitdrehenden Innenbereich ausgebildet sein.

Das Melkkarussell 1 ist im dargestellten Fall ein mittelgroßes Melkkarussell mit einer Anzahl von N = 40 Melkplätzen. Diese Anzahl N ist rein beispielhaft. Ein erfindungsgemäßes Verfahren kann auch mit einem Melkkarussell mit einer kleineren oder größeren Anzahl N von Melkplätzen umgesetzt werden.

Um die Melkplätze unterscheiden zu können, sind sie fortlaufend durchnummeriert mit einer Nummerierung von 1 bis n, wobei n ≤ N ist. Wenn in den Figuren und im nachfolgenden Text auf einen einzelnen Melkplatz Bezug genommen wird, wird dieser in der Form 4.1, 4.2 usw. bis 4.n bezeichnet. Wenn nicht auf einen speziellen der Melkplätze Bezug genommen wird oder die Gesamtheit der Melkplätze angesprochen wird, erfolgt das im Rahmen der Anmeldung nur mit dem Bezugszeichen "4" ohne angehängten Platzindex.

Die Melkplätze 4 sind in diesem Beispiel jeweils als automatische Melkplätze ausgebildet, die ein hier nicht gesondert dargestelltes Melkzeug automatisiert an die Zitzen der Tiere 10, 11 ansetzen und den Melkvorgang automatisch durchführen und kontrollieren. Die Kontrolle umfasst beispielsweise das korrekte Ansetzen der Zitzen und eine Überwachung des Milchflusses, durch die der Abschluss des Melkvorgangs bestimmt werden kann. Gegebenenfalls sind dem automatischen Melken ein Reinigungsprozess für die Zitzen der Tiere 10, 11 und/oder das Melkzeug, sowie eine abschließende Pflegebehandlung der Zitzen vor- bzw. nachgeordnet.

Außerhalb der Drehplattform 2 ist ein Eingangsbereich 5 vorhanden, in dem die Tiere 10, 11 durch entsprechende Absperrungen, z. B. Gitter, einzeln in Richtung der Drehplattform 2 geführt werden. Das dargestellte Melkkarussell 1 ist ein sog. "Außenmelkkarussell", bei dem die Tiere 10, 11 mit ihrem Kopf in Richtung des Drehpunkts 3 orientiert in den Melkplätzen 4 stehen. Im Kopfbereich ist der Melkplatz 4 entsprechend begrenzt, so dass die Tiere 10, 11 gestoppt werden, sobald sie die gewünschte Melkposition auf dem Melkplatz erreicht haben.

Im Eingangsbereich 5 sind die Melkplätze 4 nach außen hin zunächst einmal offen, so dass die Tiere 10, 11 aus dem Eingangsbereich 5 vorwärts in den nächsten Melkplatz 4 eintreten können. Bei dem dargestellten Beispiel ist kurz vor dem Betreten des Melkplatzes 4 im Eingangsbereich 5 eine Erfassungseinrichtung 6 positioniert, die eine dem Tier zugeordnete Identifikationsnummer, die beispielsweise in einem am Ohr des Tieres befestigten Chip gespeichert ist, ausliest. Eine solche Erfassungseinrichtung kann aber auch in anderen Positionen installiert sein, zum Beispiel auf den Melkplätzen oder hängend nah an vorbeifahrenden Köpfen der Tiere auf dem Melkkarussell montiert. Die Identifikationsnummer wird von der Erfassungseinrichtung 6 an eine Steuereinrichtung des Melkkarussells 1 und ggf. auch an eine übergeordnete Hofsteuerung gesendet. Der Chip kann beispielsweise ein RFID-Chip sein und die Erfassungseinrichtung 6 entsprechend eine RFID-Auslesevorrichtung umfassen.

Entgegen der Drehrichtung des Melkkarussells ist benachbart zum Eingangsbereich 5 ein Ausgangsbereich 7 vorhanden, in dem die Tiere 10, 11 die Drehplattform 2 verlassen können. Auch in diesem Ausgangsbereich 7 sind die Melkplätze 4 dazu nach außen hin offen. Die Tiere 10, 11 gehen rückwärts aus dem entsprechenden Melkplatz 4 heraus, was mehr Zeit in Anspruch nimmt als das Eintreten in den Melkplatz 4 im Eingangsbereich 5. Aus diesem Grund ist der Ausgangsbereich 7 breiter ausgebildet und umfasst im vorliegenden Fall die Breite von drei Melkplätzen 4. Um während der Mitfahrt auf der Drehplattform 2 zu verhindern, dass die Tiere 10, 11 nach hinten aus einem der Melkplätze 4 stürzen können, ist das Melkkarussell mit Ausnahme des Eingangsbereichs 5 und des Ausgangsbereichs 7 von einem Geländer 8 umgeben. Zudem sind die einzelnen Melkplätze 4 mit jeweils einer Sperre 9, z.B. einem Sperrgitter, versehen, die gesteuert hinter das jeweilige Tier 10, 11 gebracht werden kann, beispielsweise eingeschwenkt werden kann oder hoch- bzw. heruntergefahren werden kann. Die Funktion der Sperre 9 wird nachfolgend noch näher erläutert.

In der Fig. 1 ist zunächst beispielhaft eine Betriebssituation des Melkkarussells 1 gezeigt, in der nur Tiere 10 der ersten Tiergruppe sich auf der Drehplattform 2 befinden. Tiergruppen werden in der Regel von aneinander gewöhnten Tieren gebildet, z. B. Tieren, die ihren üblichen Standort in ein und demselben Stall haben und die einen vergleichbaren Entwicklungsstand haben und in der Regel gleiches Futter erhalten.

Die abgebildete Drehstellung des Melkkarussells ist derart, dass der Melkplatz mit dem Index 1, also der Melkplatz 4.1, vor dem Eingangsbereich 5 positioniert ist und entsprechend die Melkplätze 4.2-4.4 sich im Ausgangsbereich 7 des Melkkarussells 1 befinden.

Um zu ermöglichen, dass Tiere 10, 11, die während ihrer ersten Runde auf dem Melkkarussell 1 noch nicht vollständig ausgemolken sind, auf dem Melkkarussell verbleiben können, wird bei dem erfindungsgemäßen Verfahren an einer ersten Position, die sich beispielsweise in der Darstellung der Fig. 1 links vom Drehpunkt 3 befindet (bei "9 Uhr"), festgestellt wird, ob das entsprechende Tier 10, 11 bereits ausgemolken ist, oder aller Voraussicht nach während der verbleibenden Zeit der ersten Runde auf dem Melkkarussell 1 noch ausgemolken werden kann. Um dieses zu beurteilen, können Milchmengenmessungen, bevorzugt tierindividuell, vorgehalten werden und mit den aktuell gemessenen Werten verglichen werden.

Beispielsweise kann festgestellt werden, ob ein gewisser Prozentsatz der für dieses Tier 10, 11 üblichen erwarteten Milchmenge bereits gemolken werden konnte. Wird dieser Prozentsatz überschritten, ist davon auszugehen, dass der Melkvorgang nach Beendigung der ersten Runde für dieses Tier 10, 11 auch beendet ist. Weiter kann auch eine Veränderung der Milchflussrate während des Melkprozesses herangezogen werden, um zu beurteilen, ob der Melkvorgang bereits abgeschlossen ist oder zumindest während der erwarteten verbleibenden Zeit für das Tier 10, 11 in der ersten Runde auf dem Melkkarussell 1 noch abgeschlossen werden kann.

Wenn festgestellt wird, dass der Melkprozess für das Tier 10, 11 aller Voraussicht nach nicht während der verbleibenden Zeit der ersten Runde auf dem Melkkarussell 1 für das Tier 10, 11 nicht abgeschlossen werden wird, wird dieses Tier 10, 11 bzw. der entsprechende Melkplatz 4 für das Durchlaufen einer weiteren Runde auf dem Melkkarussell 1 vorgemerkt.

Beim Beispiel der Fig. 1 ist das für die Melkplätze 4.6 und 4.11 festgestellt worden. Um das jeweilige Tier 10 in diesem Melkplatz zu halten und zu verhindern, dass das Tier 10 versucht, das Melkkarussell 1 im Ausgangsbereich 7 zu verlassen, wird die hinter dem Tier 10 angeordnete Sperre 9 aktiviert. Beispielsweise wird zum Aktivieren dieser Sperre 9 ein Sperrgitter hinter dem Tier 10 eingeschwenkt.

Bei allen anderen Melkplätzen 4, die keine Vormerkung für eine weiterer Runde haben, wird (in der Regel automatisch) das Melkzeug im oder kurz vor Erreichen des Ausgangsbereichs 7 abgenommen und ggf. ein Reinigungs- und/oder Pflegeprozess für die Zitzen eingeleitet. Danach verlassen die Tiere 10, 11 die Drehplattform 2 entweder selbständig oder sie werden zum Verlassen angetrieben, z.B. durch einen unangenehmen Druckluftstoß oder einen mechanischen Austreiber.

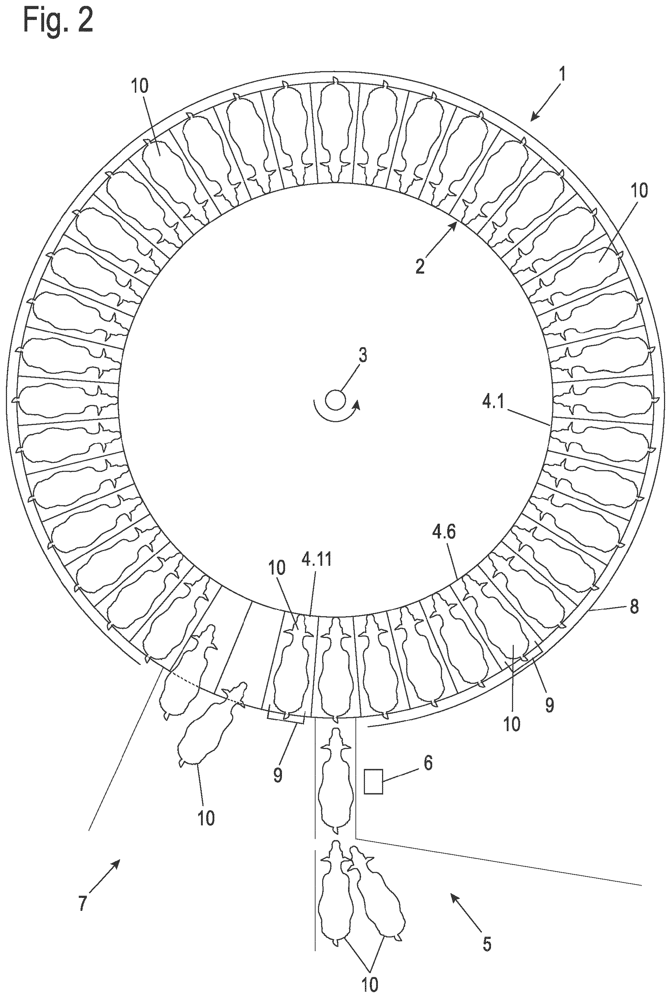

Fig. 2 zeigt das Melkkarussell 1 aus Fig. 1 nach einem Weiterdrehen um neun Plätze. Durch das Weiterdrehen der Drehplattform 2 um diese neun Plätze ist der Melkplatz 4.6 bereits am Ausgangsbereich 7 und am Eingangsbereich 5 vorbeirotiert und das entsprechende Tier 10 befindet sich in einer weiteren Runde auf dem Melkkarussell 1, innerhalb derer es aller Wahrscheinlichkeit nach dann auch ausgemolken werden wird. Das Tier 10 in dem Melkplatz 4.11 befindet sich noch im Ausgangsbereich 7, wird aber wie geplant durch die aktivierte Sperre 9 am Verlassen des Melkplatzs 4.11 gehindert und wird entsprechend ebenfalls in die weitere Runde auf dem Melkkarussell einfahren.

Erfindungsgemäß erfolgt ein derartiges Durchfahren einer weiteren Runde auf dem Melkkarussell 1 nur, wenn die Auswertung der Daten der Erfassungsvorrichtung 6 ergibt, dass sich beim Eintreten der für die weitere Runde vorgesehenen Tiere 10 kein Tier einer anderen Tiergruppe auf dem Melkkarussell 1 befindet bzw. befunden hat, also sich auf der Drehplattform 2 nur Tiere einer Tiergruppe befinden, wie z.B. nur Tiere 10 der ersten Tiergruppe bei der Fig. 2. In einem solchen Fall kann es trotz des Durchfahrens einer weiteren Runde nicht zur Vermischung von Tieren 10, 11 aus zwei oder mehr verschiedenen Tiergruppen kommen.

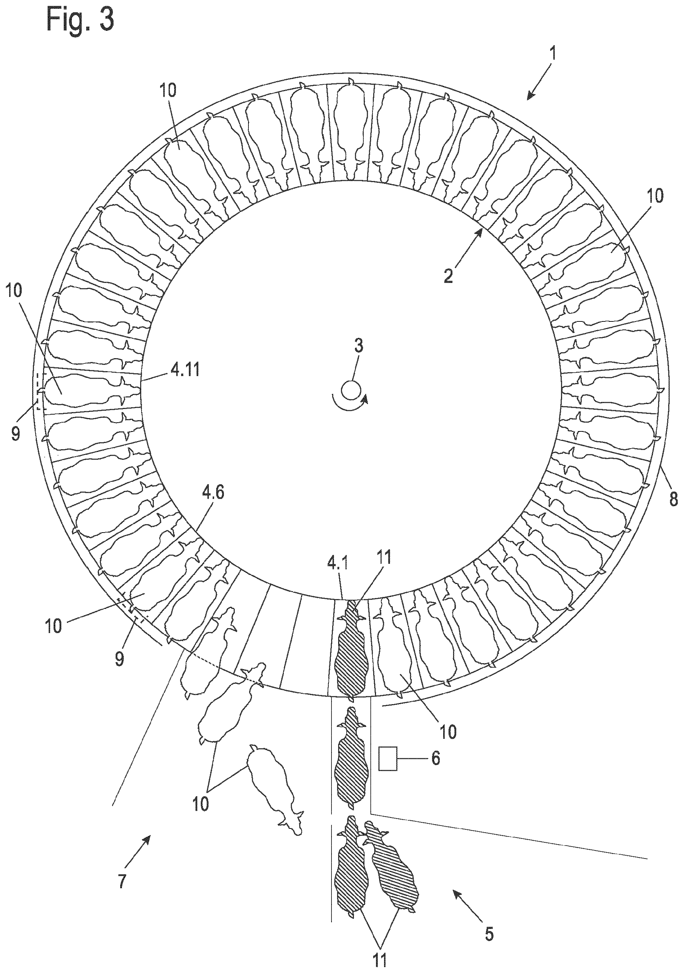

Fig. 3 zeigt die Drehplattform 2 des Melkkarussells 1 in gleicher Drehposition wie Fig. 1, also wiederum mit dem Melkplatz 4.1 am Eingangsbereich 5. Wiederum wurde ganz analog zur Situation der Fig. 1 für die Tiere 10 in den Melkplätzen 4.6 und 4.11 festgestellt, dass diese aller Voraussicht nach noch nicht ausgemolken sein werden, weswegen sie zunächst für eine weitere Runde auf dem Melkkarussell 1 vorgemerkt sind.

Im Unterschied zur Situation in Fig. 1 hat jedoch mit dem Tier 11 ein Tier einer zweiten Tiergruppe den Melkplatz 4.1 des Melkkarussells 1 betreten. Dieses ist von der Erfassungsvorrichtung 6 detektiert worden. Tiere 11 der zweiten Tiergruppe sind beispielsweise aus einem anderen Stall zugeführt worden. Würden die Tiere 10 aus den Melkplätzen 4.6 und 4.11 nun tatsächlich eine weitere Runde auf dem Melkkarussell 1 absolvieren, würde das dazu führen, dass diese Tiere 10 den Ausgangsbereich 7 zusammen mit Tieren 11 aus der zweiten Tiergruppe erreichen würden, wodurch eine Vermischung der Tiere 10, 11 aus beiden Tiergruppen eintreten würde.

Erfindungsgemäß wird in dem Fall verhindert, dass die eigentlich vorgemerkten Tiere 10, hier in den Melkplätzen 4.6 und 4.11, eine weitere Runde auf dem Melkkarussell 1 absolvieren. Die Sperren 9 werden entweder gar nicht erst aktiviert oder zumindest rechtzeitig wieder deaktiviert. Dieses ist durch gestrichelte Darstellung der Sperren 9 an den Melkplätzen 4.6 und 4.11 in der Fig. 3 angezeigt.

Beispielhaft wird hier bereits mit der Anwesenheit eines Tieres 11 der zweiten Tiergruppe eine weitere Runde für Tiere 10 der ersten Tiergruppe unterbunden. Es kann in einer Verallgemeinerung der hier dargestellten Grundidee vorgesehen sein, erst bei dem Erreichen einer vorgegebenen Maximalanzahl an Tieren 11 der zweiten Tiergruppe auf der Drehplattform 2 die weitere Runde für Tiere 10 der ersten Tiergruppe zu unterbinden. Die Maximalanzahl wäre im hier dargestellten Beispiel also gleich 1, könnte aber auch größer sein, beispielsweise aus dem Bereich 2 bis 5 ausgewählt sein.

So kann verhindert werden, dass einzelne oder wenige Tiere 11 der zweiten Tiergruppe (die unter Umstände bereits von vorneherein untergemischt waren) bereits die Option der weiteren Runde nehmen.

In der Regel wird die "weitere Runde" eine zweite Runde sein. Dass noch mehr als zwei Runden zum Ausmelken benötigt werden, ist unwahrscheinlich und es kann auch vorgesehen sein, grundsätzlich das Verfahren auf maximal zwei Runden zu beschränken.

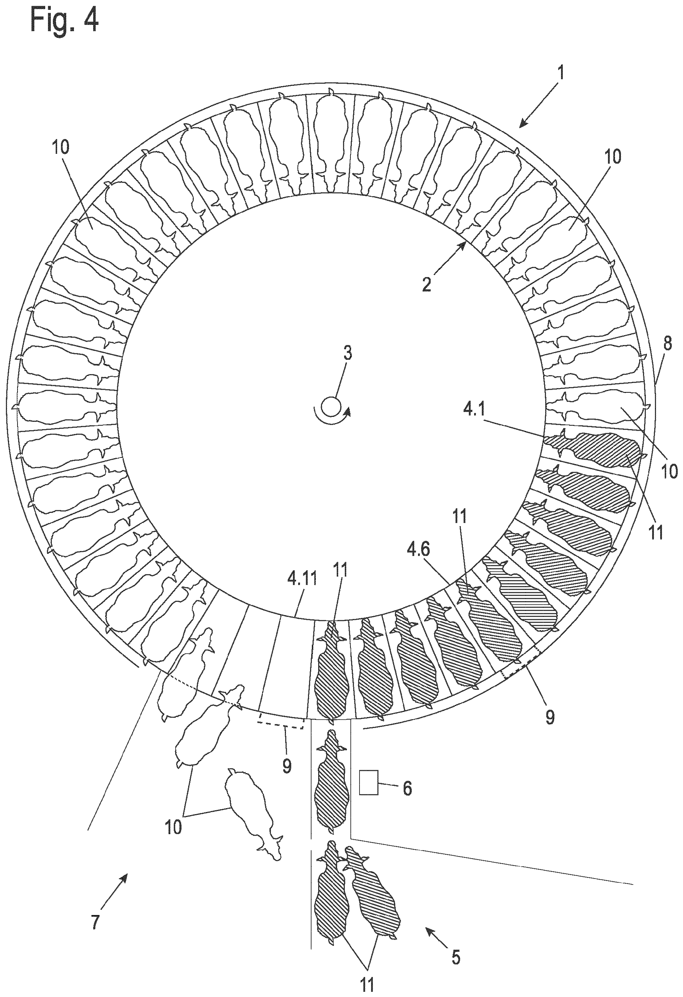

In Fig. 4 ist das Resultat dieser Vorgehensweise dargestellt: Die Sperren 9 sind deaktiviert und alle Tiere 10 der ersten Tiergruppe, auch die in den Melkplätzen 4.6 und 4.11 haben das Melkkarussell 1 im Ausgangsbereich 7 verlassen, so dass diese Melkplätze bereits von einem Tier 11 der zweiten Tiergruppe benutzt werden (wie bei Melkplatz 4.6) bzw. in Kürze benutzt werden (wie beim Melkplatz 4.11).

Zur Behandlung der eigentlich für eine weitere Runde vorgemerkten Tiere 10 in den Melkplätzen 4.6 und 4.11 sind verschiedene Optionen möglich, die ggf. auch kombiniert eingesetzt werden können. Zum einen kann die Drehplattform 2 des Melkkarussells 1 verlangsamt werden, sobald festgestellt wird, dass mindestens eines der Tiere 10 auf der Drehplattform 2 für eine weitere Runde vorgesehen ist, diese aber nicht durchgeführt werden kann. Durch das Verlangsamen der Drehzahl der Drehplattform 2 wird die Zeit, die für dieses Tier 10 bis zum Erreichen des Ausgangsbereichs 7 noch zur Verfügung steht, so weit erhöht, dass mit einer höheren Wahrscheinlichkeit das entsprechende Tier 10 doch noch ausgemolken werden kann.

Alternativ oder zusätzlich dazu kann vorgesehen sein, die Drehplattform 2 entweder kurz vor dem Erreichen des Ausgangsbereichs 7 für das entsprechende Tier 10 zu stoppen oder bis in den Ausgangsbereich 7 einzufahren und die Sperre 9 zunächst noch aktiviert zu lassen, bis der Melkvorgang tatsächlich abgeschlossen werden konnte. Eine dritte Möglichkeit besteht darin, den Melkvorgang für Tiere 10, die eigentlich für eine weitere Runde vorgesehen waren, im Ausgangsbereich 7 zwangsweise zu beenden. Da ein Verlassen des Melkplatzes 4 vor dem vollständigen Ausmelken ein Stressfaktor für die Tiere 10 darstellt, kann vorgesehen sein, diese dritte Option nur als Rückfallposition zu nutzen, wenn die beiden erstgenannten Optionen auch nach längerer Wartezeit nicht zu einem vollständigen Ausmelken geführt haben.

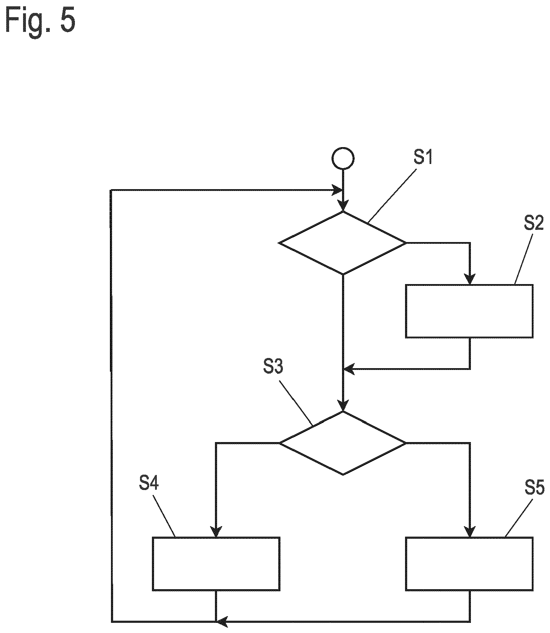

In Fig. 5 ist das zuvor anhand des Beispiels erläuterte Betriebsverfahren für das erfindungsgemäße Melkkarussell 1 nochmals in Form eines Flussdiagramms zusammengestellt. Das Verfahren kann beispielsweise zur Steuerung des in den Figuren 1-4 gezeigten Melkkarussells 1 verwendet werden und wird nachfolgend beispielhaft mit Bezug auf diese Figuren erläutert. Es wird mithilfe einer Steuereinrichtung des Melkkarussells 1 durchgeführt.

Nach dem Start des Verfahrens, das als ein Endlosverfahren während des Betriebs des Melkkarussells 1 ausgebildet ist, wird in einem ersten Schritt S1 ermittelt, ob ein Tier 10, 11, das sich in einem der Melkplätze 4 des Melkkarussells 1 befindet, voraussichtlich bis zum Erreichen des Ausgangsbereichs 7 des Melkkarussells 1 ausgemolken sein wird. Zu diesem Zweck können, wie zuvor im Zusammenhang mit den Figuren 1-4 bereits erläutert, Daten, die während des Melkvorgangs aufgenommen werden, insbesondere Daten über die bislang gemolkene Milchmenge und Daten über eine aktuelle Milchflussrate und/oder eine Veränderung der Milchflussrate, berücksichtigt werden. Dabei können tierindividuell gespeicherte Daten über Milchmengen und Milchflussraten, die in vorherigen Melkvorgängen der Tiere 10, 11 aufgenommen wurden, genutzt werden, um eine erwartete Milchmenge zum aktuellen Zeitpunkt abzuschätzen.

Bevorzugt wird der Schritt S1 für dasjenige Tier 10, 11 durchgeführt, das in einem Melkplatz 4 steht, der sich gerade an einer bestimmten Position befindet. Diese Position, nachfolgend erste Position genannt, kann beispielsweise in einem Bereich von 60-90%, z.B. bei 75 % der Drehung der Drehplattform 2 des Melkkarussells 1 bezogen auf die Position des Eingangsbereichs 5 liegen. Bei den Figuren 1-4 wäre das, wie zuvor im Zusammenhang mit Fig. 1 erläutert, beispielsweise im Bereich von "9 Uhr", wenn der Eingangsbereich 5 bei "6 Uhr" angeordnet ist.

In alternativen Ausgestaltungen des Verfahrens ist es möglich, dass in dem Schritt S1 eine Überprüfung nicht nur für den Melkplatz 4 bzw. das entsprechende Tier 10, 11 durchgeführt wird, die sich an einer vordefinierten ersten Position befindet, sondern, dass mehrere erste Positionen definiert sind, an denen die Überprüfung stattfindet oder wiederholt wird.

Wenn in dem Schritt S1 festgestellt wird, dass das entsprechende Tier 10, 11 voraussichtlich nicht bis zum Erreichen des Ausgangsbereichs 7 ausgemolken sein wird, verzweigt das Verfahren zu einem Schritt S2, in dem der entsprechende Melkplatz 4 und damit das dort befindende Tier 10, 11 für das Absolvieren einer weiteren Runde auf dem Melkkarussell 1 vorgemerkt wird. Bereits diese Vormerkung kann mit dem Aktivieren einer Sperre 9, die ein Austreten des Tieres im Ausgangsbereichs 7 aus dem Melkplatz 4 verhindert, begleitet sein.

Das Verfahren wird nach dem Schritt S2 mit einem Schritt S3 fortgeführt. Dieser Schritt S3 wird auch ausgeführt, wenn im Schritt S1 nicht festgestellt wurde, dass eine weitere Runde auf dem Melkkarussell vorgesehen ist.

In dem Schritt S3 wird eine Anzahl von Tieren 10, 11, die sich in einem Melkplatz 4 des Melkkarussells 1 befinden, ermittelt, die zu einer anderen als der vorherrschenden Tiergruppe gehören. Die Information, welches Tier 10, 11 sich in den Melkplätzen 4 befindet, basiert auf den von der Erfassungseinrichtung 6 eingelesenen Identifikationsinformationen der Tiere 10, 11. Die Zuordnung der Tiere 10, 11 zu den Tiergruppen kann in der Steuereinrichtung des Melkkarussells 1 abgespeichert sein oder kann von der Steuerreinrichtung des Melkkarussells 1 von einem übergeordneten Steuerungssystem ("Hofsteuerung") abgerufen werden.

Wenn in dem Schritt S3 festgestellt wird, dass die Anzahl der Tiere 10, 11, die zu einer anderen als der vorherrschenden Tiergruppe gehören, kleiner als oder gleich einer vorgegebenen Maximalzahl ist, wird das Verfahren mit dem Schritt S4 fortgesetzt, indem eine Vormerkung für eine weitere Runde beibehalten wird und, falls im Schritt S2 noch nicht erfolgt, die Sperre 9 an dem entsprechenden Melkplatz 4 aktiviert wird und der Melkplatz 4 wird angewiesen, den Melkvorgang fortzusetzen. Das entsprechende Tier 10, 11 in diesem Melkplatz 4 wird somit in einer weiteren Runde über den Ausgangsbereich 7 und den Eingangsbereich 5 hinweg auf dem Melkkarussell 1 verbleiben. Die Maximalzahl kann gleich 1 gewählt sein, was bedeutet, dass eine Vormerkung für die weitere Runde dann und nur dann beibehalten wird, wenn alle Tiere 10, 11 auf der Drehplattform 2 ein und derselben Tiergruppe angehören. Die Maximalzahl kann alternativ auch größer als 1 gewählt sein und beispielsweise zwischen 2 und 5 liegen.

Wenn in dem Schritt S3 festgestellt wird, dass die Anzahl der Tiere 10, 11, die zu einer anderen als der vorherrschenden Tiergruppe gehören, größer als die vorgegebene Maximalzahl ist, verzweigt das Verfahren vom Schritt S3 zu einem Schritt S5. In diesem Schritt S5 wird abgefragt, ob einer der Melkplätze 4, für den eine Vormerkung für eine weitere Runde vorliegt, kurz davor ist, den Ausgangsbereichs 7 zu erreichen. Es wird dann mindestens eine der zuvor beschriebenen Möglichkeiten durchgeführt, um das entsprechende Tier 10, 11 entweder noch ausmelken zu können oder ggf. auch nicht ausgemolken im Ausgangsbereich 7 aus dem Melkplatz 4 zu entlassen.

Die Möglichkeiten können ein Verlangsamen der Drehgeschwindigkeit der Drehplattform 2 umfassen und/oder ein Anhalten der Drehplattform 2 an einer definierten Position, in der sich das entsprechende Tier 10, 11 noch vor dem Ausgangsbereich 7 befindet oder bei noch aktivierter Sperre 9 im Ausgangsbereich 7 befindet. In dieser Position kann das Tier 10, 11 noch weiter gemolken wird, bis es ausgemolken ist oder bis zumindest eine Mindestmilchmenge gemolken wurde oder bis ein vorher festgelegter Mindestanteil der für dieses Tier 10, 11 in diesem Zeitpunkt zu erwartenden Milchmenge gemolken wurde oder bis eine maximal zur Verfügung stehende Zeit für den Melkvorgang des einen Tieres 10, 11 erreicht ist. Durch die genannten Maßnahmen wird erreicht, dass der Melkvorgang beendet oder abgebrochen wird und dass auch die zuvor mit einer Vormerkung belegten Melkplätze 4 frei sind, wenn sie den Eingangsbereich 5 erreichen.

### Bezugszeichen

- 1: Melkkarussell
- 2: Drehplattform
- 3: Drehpunkt
- 4.1 - 4.n: Melkplatz
- 5: Eingangsbereich
- 6: Erfassungseinrichtung
- 7: Ausgangsbereich
- 8: Geländer
- 9: Sperre

- 10: Tier (einer ersten Tiergruppe)
- 11: Tier (einer zweiten Tiergruppe)

## Patentansprüche

1. Verfahren zum Steuern eines Melkkarussells (1), das eine Mehrzahl von Melkplätzen (4) zum Melken von milchgebenden Tieren (10, 11) auf einer Drehplattform (2) aufweist, wobei die Tiere (10, 11) während einer Mitfahrt in jeweils einem der Melkplätze (4) gemolken werden, mit den folgenden Schritten:
- Ermitteln, ob ein Tier (10, 11), das sich ein einem der Melkplätze (4) befindet, voraussichtlich am Ende einer absolvierten Runde auf der Drehplattform (2) ausgemolken sein wird;
- Ermitteln einer Tiergruppenzugehörigkeit der Tiere (10, 11) auf der Drehplattform (2);
**dadurch gekennzeichnet, dass** das Verfahren weiterhin die folgenden Schritte umfasst:
- Zulassen des Durchfahrens einer weiteren Runde auf der Drehplattform (2) für eines der Tiere (10, 11), die am Ende der absolvierten Runde auf der Drehplattform (2) nicht ausgemolken sind, wenn eine Anzahl von Tieren (10, 11) einer zweiten Tiergruppe auf der Drehplattform (2) kleiner oder gleich einer vorgegeben Maximalzahl ist; und
- Unterbinden des Durchfahrens der weiteren Runde auf der Drehplattform (2) für eines der Tiere (10, 11), die am Ende der absolvierten Runde auf der Drehplattform (2) nicht ausgemolken sind, wenn die Anzahl von Tieren (10, 11) der zweiten Tiergruppe auf der Drehplattform (2) größer als die vorgegebene Maximalzahl ist.

2. Verfahren nach Anspruch 1, bei dem die Maximalzahl gleich 1 ist.

3. Verfahren nach Anspruch 1 oder 2, bei dem das Melkkarussell (1) eine Erfassungsvorrichtung (6) zur Erfassung von Identifikationsinformationen der Tiere (10, 11) aufweist, wobei das Ermitteln der Tiergruppenzugehörigkeit der Tiere (10, 11) auf den erfassten Identifikationsinformationen basiert.

4. Verfahren nach einem der Ansprüche 1 bis 3, bei dem das Zulassen des Durchfahrens der weiteren Runde auf der Drehplattform (2) ein Aktivieren einer Sperre (9) an dem entsprechenden Melkplatz (4) umfasst, wobei die Sperre (9) ein Verlassen des Melkplatzes (4) verhindert.

5. Verfahren nach einem der Ansprüche 1 bis 4, bei dem das Unterbinden des Durchfahrens der weiteren Runde auf der Drehplattform (2) ein Deaktivieren der Sperre (9) an dem entsprechenden Melkplatz (4) umfasst.

6. Verfahren nach einem der Ansprüche 1 bis 5, bei dem das Unterbinden des Durchfahrens der weiteren Runde auf der Drehplattform (2) ein Verringern einer Drehzahl der Drehplattform (2) umfasst.

7. Verfahren nach Anspruch 6, bei dem das Unterbinden des Durchfahrens der weiteren Runde auf der Drehplattform (2) ein Stoppen der Drehplattform (2) umfasst.

8. Verfahren nach einem der Ansprüche 1 bis 7, bei dem das Unterbinden des Durchfahrens der weiteren Runde auf der Drehplattform (2) ein Beenden des Melkens entsprechenden Melkplatz (4) umfasst.

9. Verfahren nach einem der Ansprüche 1 bis 8, bei dem in dem Schritt des Ermittelns, ob ein Tier (10, 11) voraussichtlich am Ende der absolvierten Runde auf der Drehplattform (2) ausgemolken sein wird, eine bislang in dem Melkvorgang gemolkenen Milchmenge und/oder eine Milchflussrate ausgewertet wird.

10. Verfahren nach Anspruch 9, bei dem die bislang in dem Melkvorgang gemolkenen Milchmenge und/oder die Milchflussrate an einer oder mehreren Positionen des Melkkarussells ermittelt und mit Vergleichswerten verglichen wird.

11. Verfahren nach Anspruch 10, bei dem die Vergleichswerte tierindividuell sind.

12. Melkkarussell (1) mit einer Mehrzahl von Melkplätzen (4) zum Melken von milchgebenden Tieren (10, 11) auf einer Drehplattform (2) und einer Steuereinrichtung, **dadurch gekennzeichnet, dass** die Steuereinrichtung zur Durchführung eines Verfahrens nach einem der Ansprüche 1 bis 11 eingerichtet ist.

## Claims

1. Method for controlling a rotary milking parlor (1) which has a plurality of milking places (4) for milking milk-producing animals (10, 11) on a rotary platform (2), wherein the animals (10, 11) are milked during a ride in each one of the milking places (4), having the following steps of:
- determining whether an animal (10, 11) located in one of the milking places (4) is expected to be milked out at the end of a completed round on the rotary platform (2);
- determining an animal group membership of the animals (10, 11) on the rotary platform (2);
**characterized in that** the method further comprises the following steps:
- allowing one of the animals (10, 11) which are not milked out at the end of the completed round on the rotary platform (2) to pass through another round on the rotary platform (2) if a number of animals (10, 11) of a second group of animals on the rotary platform (2) is less than or equal to a specified maximum number; and
- preventing one of the animals (10, 11) which have not been milked out at the end of the completed round on the rotary platform (2) from passing through the further round on the rotary platform (2) if the number of animals (10, 11) of the second group of animals on the rotary platform (2) is greater than the specified maximum number.

2. Method according to claim 1, in which the maximum number is equal to 1.

3. Method according to claim 1 or 2, in which the rotary milking parlor (1) comprises a detection device (6) for detecting identification information of the animals (10, 11), wherein the determination of the animal group membership of the animals (10, 11) is based on the detected identification information.

4. Method according to one of claims 1 to 3, in which allowing passage of the further round on the rotary platform (2) comprises activating a barrier (9) at the corresponding milking place (4), wherein the barrier (9) prevents leaving the milking place (4).

5. Method according to one of claims 1 to 4, in which preventing passage of the further round on the rotary platform (2) comprises deactivating the barrier (9) at the corresponding milking place (4).

6. Method according to one of claims 1 to 5, in which preventing passage of the further round on the rotary platform (2) comprises reducing a rotational speed of the rotary platform (2).

7. Method according to claim 6, in which preventing passage of the further round on the rotary platform (2) comprises stopping the rotary platform (2).

8. Method according to one of claims 1 to 7, in which preventing passage of the further round on the rotary platform (2) comprises stopping the milking corresponding to the milking place (4).

9. Method according to one of claims 1 to 8, in which in the step of determining whether an animal (10, 11) is expected to be milked out at the end of the completed round on the rotary platform (2), a quantity of milk milked so far in the milking process and/or a milk flow rate is evaluated.

10. Method according to claim 9, in which the quantity of milk milked so far in the milking process and/or the milk flow rate is determined at one or more positions of the rotary milking parlor and compared with reference values.

11. Method according to claim 10, in which the reference values are animal-specific.

12. Rotary milking parlor (1) having a plurality of milking places (4) for milking milk-producing animals (10, 11) on a rotary platform (2) and a control device, **characterized in that** the control device is set up to carry out a method according to one of claims 1 to 11.

## Revendications

1. Procédé de commande d'un manège de traite (1) comportant plusieurs stalles de traite (4) pour la traite d'animaux laitiers (10, 11) sur une plate-forme rotative (2), dans lequel les animaux (10, 11) sont traits chacun dans une des stalles de traite (4) pendant un déplacement commun, comprenant les étapes suivantes :
- détermination de la probabilité qu'un animal (10, 11) se trouvant dans l'un des stalles de traite (4) soit fini de traire à la fin d'un tour complet sur la plate-forme rotative (2) ;
- détermination de l'appartenance des animaux (10, 11) sur la plate-forme rotative (2) à un groupe d'animaux ;
**caractérisé en ce qu'**il comprend en outre les étapes suivantes :
- autorisation d'un nouveau tour sur la plate-forme rotative (2) pour l'un des animaux (10, 11) qui n'est pas fini de traire à la fin du tour complet sur la plate-forme rotative (2) si le nombre d'animaux (10, 11) d'un deuxième groupe d'animaux sur la plate-forme rotative (2) est inférieur ou égal à un nombre maximal prédéterminé, et
- blocage du nouveau tour sur la plate-forme rotative (2) pour l'un des animaux (10, 11) qui n'est pas fini de traire à la fin du tour complet sur la plate-forme rotative (2) si le nombre d'animaux (10, 11) du deuxième groupe d'animaux sur la plate-forme rotative (2) est supérieur au nombre maximal prédéterminé.

2. Procédé selon la revendication 1, dans lequel le nombre maximal est égal à 1.

3. Procédé selon la revendication 1 ou 2, dans lequel le manège de traite (1) comporte un dispositif d'acquisition (6) pour l'acquisition d'informations d'identification des animaux (10, 11), la détermination de l'appartenance des animaux (10, 11) à un groupe d'animaux étant basée sur les informations d'identification acquises.

4. Procédé selon l'une des revendications 1 à 3, dans lequel l'autorisation du nouveau tour sur la plate-forme rotative (2) comprend une activation d'une barrière (9) à l'emplacement de traite (4) correspondant, laquelle barrière (9) empêche de quitter l'emplacement de traite (4).

5. Procédé selon l'une des revendications 1 à 4, dans lequel le blocage du nouveau tour sur la plate-forme rotative (2) comprend une désactivation de la barrière (9) à l'emplacement de traite (4) correspondant.

6. Procédé selon l'une des revendications 1 à 5, dans lequel le blocage du nouveau tour sur la plate-forme rotative (2) comprend une réduction de la vitesse de rotation de la plate-forme rotative (2).

7. Procédé selon la revendication 6, dans lequel le blocage du nouveau tour sur la plate-forme rotative (2) comprend un arrêt de la plate-forme rotative (2).

8. Procédé selon l'une des revendications 1 à 7, dans lequel le blocage du nouveau tour sur la plate-forme rotative (2) comprend l'arrêt de la traite à l'emplacement de traite (4) correspondant.

9. Procédé selon l'une des revendications 1 à 8 dans lequel, dans l'étape de détermination de la probabilité qu'un animal (10, 11) soit fini de traire à la fin d'un tour complet sur la plate-forme rotative (2), une quantité de lait obtenue jusque-là pendant l'opération de traite et/ou un débit de lait sont analysés.

10. Procédé selon la revendication 9, dans lequel la quantité de lait obtenue jusque-là pendant l'opération de traite et/ou le débit de lait sont déterminés en une ou plusieurs positions du manège de traite et comparés à des valeurs de référence.

11. Procédé selon la revendication 10, dans lequel les valeurs de référence sont individuelles pour chaque animal.

12. Manège de traite (1) comprenant plusieurs stalles de traite (4) pour la traite d'animaux laitiers (10, 11) sur une plate-forme rotative (2) et une installation de commande, **caractérisé en ce que** l'installation de commande est configurée pour l'exécution d'un procédé selon l'une des revendications 1 à 11.
